# EUROPEAN PATENT APPLICATION

(11) **EP 4 618 201 A1**
(43) Date of publication of application: **17.09.2025**
(21) Application number: 23888949.7
(22) Date of filing: 13.10.2023
(51) Int. Cl.: H01M 8/0258, H01M 8/026

(54) **FUEL CELL SEPARATOR HAVING POINT CONTACT CHANNEL STRUCTURE**

(30) Priority: 08.11.2022 KR 20220147673
(71) Applicant: Terralix Co.,Ltd., Buan-gun, Jeollabuk-do 56332 (KR)
(72) Inventor: BAEK, Sang Cheol, Jeonju-si Jeollabuk-do 54865 (KR); KIM, Dae Sung, Buan-gun Jeollabuk-do 56316 (KR)
(74) Representative: González López-Menchero, Álvaro Luis
(86) International application number: PCT/KR2023/015830
(87) International publication number: WO 2024/101686

(57) **Abstract**

Proposed is a fuel cell separator. More particularly, proposed is a fuel cell separator having a point contact channel structure, in which the channel structure of the separator is formed inclinedly to ensure smooth transfer and discharge of condensed water, and an overlapping portion of opposite anode separator and cathode separator forms a point contact to have a minimum area so that water accumulation caused by a pressed gas diffusion layer and electrode performance degradation can be minimized.

## Description

### Technical Field

The present disclosure relates generally to a fuel cell separator. More particularly, the present disclosure relates to a fuel cell separator having a point contact channel structure, in which the channel structure of the separator is formed inclinedly to ensure smooth transfer and discharge of condensed water, and an overlapping portion of opposite anode separator and cathode separator forms a point contact to have a minimum area so that water accumulation caused by a pressed gas diffusion layer and electrode performance degradation can be minimized.

### Background Art

A fuel cell is a type of power generator that converts chemical energy of fuel into electric energy through an electrochemical reaction. Fuel cells have a wide range of applications, including serving as industrial power generators, serving as household power generators, powering vehicles, and powering small electrical/electronic devices and portable devices.

There are several types of fuel cells, but polymer electrolyte membrane fuel cells (PEMFCs) with high power density are mainly used. In a PEMFC, a membrane electrode assembly (MEA) is located at the innermost portion of the cell. The MEA includes a polymer electrolyte membrane for allowing transport of positively charged hydrogen ions therethrough, and electrode layers, i.e., a cathode and an anode, formed by applying a catalyst on opposite surfaces of the polymer electrolyte membrane to cause hydrogen and oxygen to react.

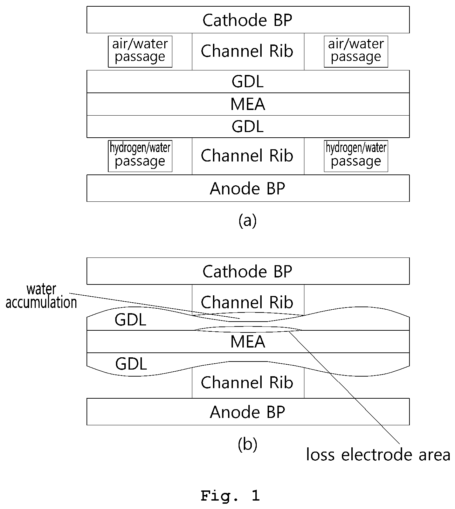

Furthermore, a pair of gas diffusion layers (GDLs) for allowing hydrogen and oxygen to diffuse toward the electrodes are formed on opposite sides of the MEA, and as illustrated in FIG. 1, an anode separator and a cathode separator for forming passages for supply of hydrogen and air are formed on opposite sides of the GDLs 20.

Here, as described in the following patent document, a channel rib is protrudingly formed on each of the anode separator and the cathode separator to form a plurality of passages for flow of hydrogen and air, respectively. As illustrated in FIG. 1(b), the gas diffusion layers are compressed as they are pressed by the channel ribs disposed on their opposite sides, causing water accumulation to occur. When water accumulation occur, gas supply is cut off, reducing a reactive electrode area and thereby deteriorating performance, which is problematic.

(Patent Document) Korean Patent No. 10-2131702 (registered on 2020.07.02.) "Separator for fuel cell and fuel cell stack comprising it"

### Disclosure

### Technical Problem

Accordingly, the present disclosure has been made keeping in mind the above problems occurring in the related art.

One objective of the present disclosure is to provide a fuel cell separator having a point contact channel structure, in which the channel structure of the separator is formed inclinedly to ensure smooth transfer and discharge of condensed water, and an overlapping portion of opposite anode separator and cathode separator forms a point contact to have a minimum area so that water accumulation caused by a pressed gas diffusion layer and electrode performance degradation can be minimized.

### Technical Solution

The present disclosure is implemented by embodiments having the following configuration in order to achieve the above objective.

According to one aspect of the present disclosure, there is provided a fuel cell separator having a point contact channel structure, the fuel cell separator including: a pair of an anode separator and a cathode separator that are formed on opposite sides of a membrane electrode assembly to form a passage for flow of fuel and a passage for flow of air, respectively. The anode separator may include a plurality of first channels protruding toward the membrane electrode assembly and spaced apart from each other at regular intervals to form a plurality of passages for flow of the fuel. The cathode separator may include a plurality of second channels protruding toward the membrane electrode assembly and spaced apart from each other at regular intervals to form a plurality of passages for flow of the air. The first channels and the second channels may be formed to be inclined at a predetermined angle along a longitudinal direction of an electrode, and may be formed to be inclined at different angles to make point contact.

According to another aspect of the present disclosure, the first channels may be formed to be inclined at an angle of more than 0° and less than 90° with respect to the longitudinal direction of the electrode, and the second channels may be formed to be inclined at an angle of more than 90° and less than 180° with respect to the same longitudinal direction.

According to another aspect of the present disclosure, the first channels and the second channels may be formed to be inclined at the same angle in opposite directions.

According to another aspect of the present disclosure, an area where the first channels and the second channels make point contact may be in a range of 10% to 20% of a total electrode area.

According to another aspect of the present disclosure, the anode separator may include: a plurality of first space separation portions forming predetermined spaces by dividing the first channels formed in a straight line, and formed at regular intervals along the first channels; and a first flow space portion for flow of the fuel and condensed water and formed between a plurality of rows of the first channels, and the cathode separator may include: a plurality of second space separation portions forming predetermined spaces by dividing the second channels formed in a straight line, and formed at regular intervals along the second channels; and a second flow space portion for flow of the air and condensed water and formed between a plurality of rows of the second channels. The first and second space separation portions may be closed by the first and second channels, respectively, in a direction orthogonal to a direction in which the fuel or air flows.

### Advantageous Effects

The present disclosure can achieve the following effects by the above embodiments, and the configuration, combination, and use relationship described below.

According to the present disclosure, by inclinedly forming a channel structure of a separator, it is possible to ensure smooth transfer and discharge of condensed water, and by enabling an overlapping portion of opposite anode separator and cathode separator to form point contact to have a minimum area, it is possible to minimize water accumulation caused by a pressed gas diffusion layer and electrode performance degradation.

### Description of Drawings

FIG. 1 is a reference view illustrating the problems associated with a conventional fuel cell stack structure.
FIG. 2 is a plan view illustrating a fuel cell separator according to an embodiment of the present disclosure.
FIG. 3 is a reference view illustrating a point contact structure of the separator illustrated in FIG. 2.
FIG. 4 is a reference view illustrating a state in which an anode separator and a cathode separator overlap.
FIG. 5 is a reference view illustrating the detailed structure of the separator.
FIG. 6 is a view illustrating the structure of a conventional anode separator (a) and a cathode separator (b) and a formation position of a water condensation area.
FIG. 7 is a view illustrating a conventional anode separator of another structure and a flooding formation process thereby.
FIG. 8 is a view illustrating a conventional anode separator of still another structure and a flooding alleviation process thereby.
FIG. 9 is a view illustrating the problems associated with the technology illustrated in FIG. 8.

### * Description of the Reference Numerals in the Drawings

| | |
|---|---|
| 1: anode separator | 11: first channel |
| 12: first space separation portion | |
| 13: first flow space portion | |
| 3: cathode separator | 31: second channel |
| 32: second space separation portion | |
| 33: second flow space portion | |

### * Description of the Reference Numerals in the Related art

| | |
|---|---|
| 100: cathode separator | 101: protrusion |
| 200: anode separator | 201: partition wall |
| 300: gas diffusion layer | |

### Best Mode

Hereinafter, exemplary embodiments of a fuel cell separator having a point contact channel structure according to the present disclosure will be described in detail with reference to the accompanying drawings. In the following description of the present disclosure, detailed descriptions of well-known functions and structures incorporated herein may be omitted to avoid obscuring the subject matter of the present disclosure. Unless the context clearly indicates otherwise, it will be further understood that the terms "comprise", "include", and/or "have", when used herein, specify the presence of stated elements, but do not preclude the presence or addition of one or more other elements.

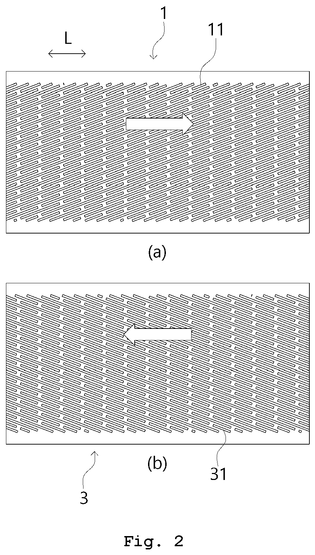

A fuel cell separator having a point contact channel structure according to an embodiment of the present disclosure will be described with reference to FIGS. 2 to 5. The fuel cell separator may include a pair of an anode separator 1 and a cathode separator 3 that are formed on opposite sides of a membrane electrode assembly to form a passage for flow of fuel and a passage for flow of air, respectively. The anode separator 1 and the cathode separator 3 may respectively include a first channel 11 and a second channel 31 that are formed to have a predetermined inclination with respect to a longitudinal direction of an electrode to form passages for flow of fuel and air. Here, the fuel may refer to hydrogen.

The first channel 11 and the second channel 31 may be formed to be inclined at a predetermined angle with respect to a longitudinal direction L of an electrode to prevent condensed water from stagnating and to ensure smooth transfer and discharge of condensed water. In particular, the first channel 11 and the second channel 31 may be formed to be inclined at different angles so that an overlapping portion of the first channel 11 and the second channel 31 with the membrane electrode assembly interposed therebetween forms point contact. This minimizes pressing of gas diffusion layers and prevents water accumulation caused by pressed gas diffusion layers and performance degradation.

As previously discussed in the background art section, when the channel ribs of the anode separator and the cathode separator with the membrane electrode assembly interposed therebetween come into contact and press the gas diffusion layers, as illustrated in FIG. 1(b), the gas diffusion layers are pressed by the channel ribs on their opposite sides in a vertical direction of the electrodes, causing water accumulation, which leads to a problem of performance degradation due to loss of electrode area.

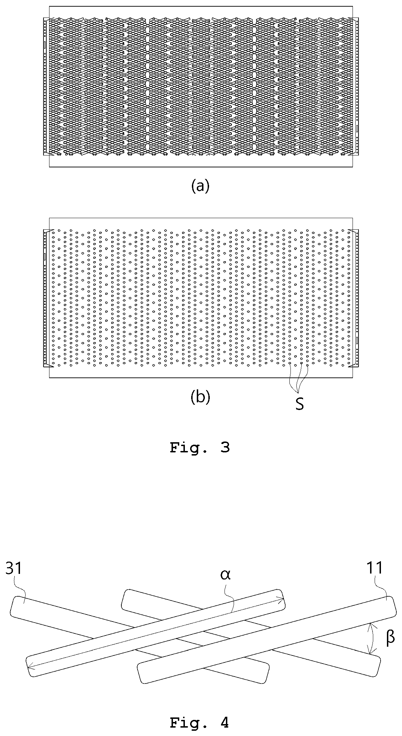

In order to solve this problem, the present disclosure is characterized in that as illustrated in FIG. 2, the first channel 11 of the anode separator 1 and the second channel 31 of the cathode separator 3 are formed to be inclined at different angles, and as illustrated in FIG. 3, overlapping portions S of the first channel 11 and the second channel 31 form point contact to minimize the area where the first channel 11 and the second channel 31 overlap.

At this time, the reason why the first channel 11 and the second channel 31 are formed to be inclined with respect to the longitudinal direction of the electrode is to ensure that condensed water is transferred and discharged without accumulating. A detailed description of the first channel 11 and the second channel 31 in this regard will be described later.

In particular, the first channel 11 may be formed to be inclined at an angle of more than 0° and less than 90° with respect to the longitudinal direction L of the electrode and the second channel 31 may be formed to be inclined at an angle of more than 90° and less than 180° with respect to the longitudinal direction L of the electrode so that the first channel 11 and the second channel 31 are formed to be inclined in opposite directions.

With this, fuel and air supplied through spaces provided by the first channel 11 and the second channel 31 may be supplied evenly throughout the electrodes, thereby enabling efficient power generation and reducing performance degradation through point contact.

Additionally, as illustrated in FIG. 4, a length α and an angle β of the first channel 11 and the second channel 31 may be appropriately adjusted so that a support effect is maintained while minimizing the area where the first channel 11 and the second channel 31 overlap.

At this time, it is preferable that the area where the first channel 11 and the second channel 31 overlap is in the range of 10% to 20% of the total electrode area. More preferably, the first channel 11 and the second channel 31 are formed to be inclined at the same angle as the longitudinal direction L of the electrode so that they have symmetrical shapes. This enables a more uniform supply of fuel and air and minimization of contact area.

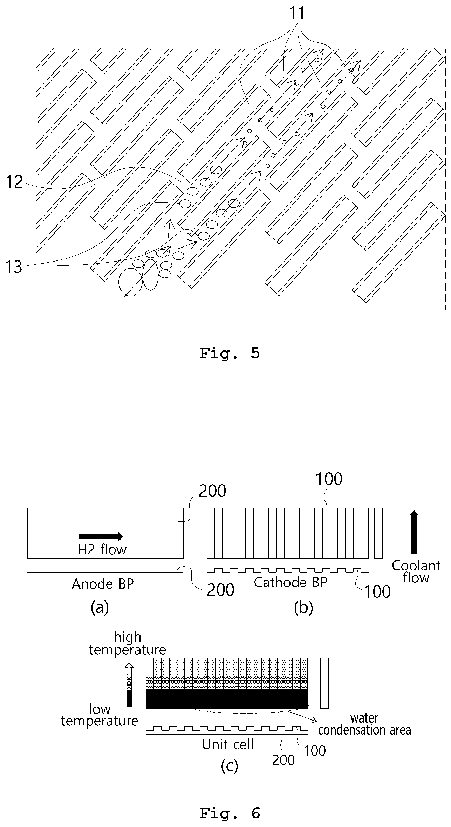

The anode separator 1 and the cathode separator 3 will be described in more detail. As illustrated in FIG. 5, the anode separator 1 may include a plurality of first space separation portions 12 forming predetermined spaces by dividing a plurality of first channels 11 formed in a straight line, and formed at regular intervals along the first channels 11; and a first flow space portion 13 for flow of fuel and condensed water and formed between a plurality of rows of the first channels 11. Additionally, the cathode separator 3 may be formed to be inclined in the opposite direction so as to have a symmetrical shape with the anode separator 1, and, like the anode separator 1, may include a plurality of second space separation portions 32 and a flow space portion 33. The second channel 31, the second space separation portion 32, and the second flow space portion 33 of the cathode separator 3 have the same function and effect as the first channel 11, the first space separation portion 12, and the first flow space portion 13, but only differ in their directions. Therefore, in the following, only the first channel 11, the first space separation portion 12, and the first flow space portion 13 will be described, and description of the second channel 31, the second space separation portion 32, and the second flow space portion 33 will be omitted.

As illustrated in FIG. 6, a conventional anode separator 200 is formed in the form of a flat plate, and a water condensation area where water is condensed is formed due to a low temperature at an air inlet. The condensed water may stagnate in the water condensation area, causing a flooding phenomenon. In this case, the movement of hydrogen may be blocked, and the current density may be increased as a reaction electrode is reduced, forming a hot spot where the temperature rises rapidly at an air outlet and causing damage to the electrode.

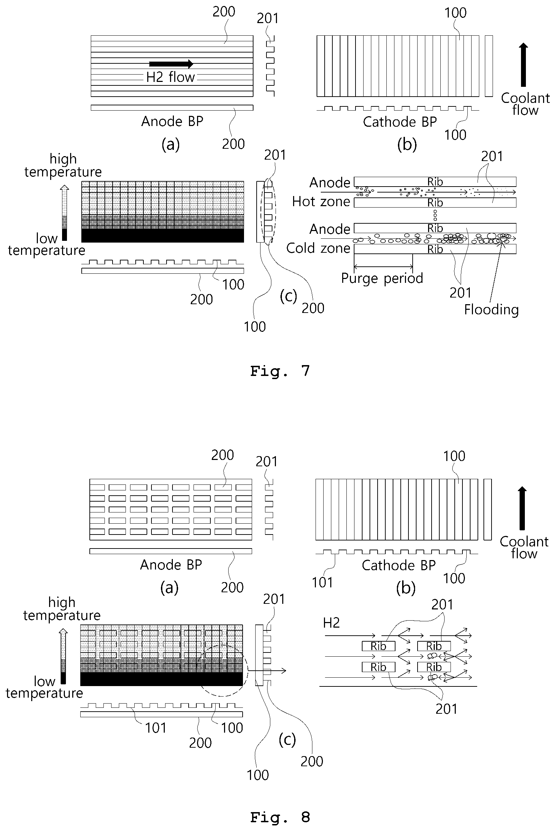

Therefore, as illustrated in FIG. 7, it may be conceivable to form a partition wall 201 on an anode separator 200 to form a hydrogen flow direction orthogonal to an air flow direction at a cathode separator 100. In this case, the flooding phenomenon may be alleviated compared to the technology illustrated in FIG. 6. However, since a hydrogen flow path is formed long in an electrode direction, water tends to collect in a cold zone, and as a result, flooding still occurs as illustrated in FIG. 6. Additionally, the anode separator 200, which is formed long in the longitudinal direction of the electrode, tends to be deformed due to stacking of structures, and condensed water may accumulate in a deformed portion, causing the flooding phenomenon to be more likely to occur.

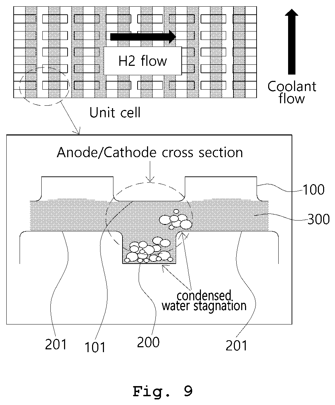

Additionally, in order to alleviate stagnation of condensed water, as illustrated in FIG. 8, a plurality of partition walls 201 may be formed at regular intervals to have a pattern shape. This enables hydrogen and water to flow in a direction orthogonal to an electrode direction, thereby alleviating the flooding phenomenon. However, as illustrated in FIG. 9, a gas diffusion layer (GDL) 300 may be pressed and deformed by a protrusion 101 of the cathode separator 100, causing stagnation of condensed water due to a cross section. This makes it still difficult to achieve cooling in a high temperature area (air outlet), causing a dry out phenomenon and thereby resulting in degradation of fuel cell performance.

In order to solve the above problems, in the present disclosure, as illustrated in FIG. 5, by forming spaces for allowing condensed water to be forcibly transferred together with fuel and air in an inclined direction with respect to the longitudinal direction of the electrode, it is possible to minimize stagnation of condensed water. It is also possible to enable the high temperature area (air outlet) to be cooled through transfer of condensed water, thereby alleviating the dry out phenomenon. Additionally, even when the temperature of outside air rises, it is possible to maintain a cooling effect through transfer of condensed water, enabling stable operation.

The first channels 11 are formed to protrude from the anode separator 1 toward an anode (electrode), and serve to define movement paths of hydrogen. In particular, as illustrated in FIG. 2, the first channels 11 may be formed to be inclined at an angle of more than 0° and less than 90° with the longitudinal direction L of the electrode, and allow condensed water from an inlet to be transferred to an outlet along the first flow space portion 13 between the first channels 11. Additionally, the first channels 11 may be formed in a straight line to be spaced apart from each other at regular intervals, and the first space separation portions 12 may be formed between the first channels 11 formed in a straight line to allow flow of fuel and condensed water therethrough. Therefore, the first channels 11 formed in a straight line may be arranged to form a plurality of rows parallel to each other in a fine pattern shape. This prevents stagnation of condensed water and prevents the flooding and dry out phenomena through forced transfer of condensed water. Additionally, since the first channels 11 are formed in the form of fine patterns spaced apart from each other at regular intervals, the rigidity of the separator may be secured, thereby preventing structural damage.

The first space separation portions 12 are spaces formed by dividing the first channels 11 formed in a straight line, and may be formed in a straight line along the first channels 11 at regular intervals. Therefore, fuel and condensed water may be transferred between adjacent first flow space portions 13 through the first space separation portions 12. This minimizes stagnation in the flow of fuel and condensed water, ensures smooth supply of fuel, and achieves effective cooling and prevention of dry out through transfer of condensed water to a high temperature area. Additionally, the first space separation portions 12 may be closed by the first channels 11 in a direction orthogonal to a fuel flow direction corresponding to a direction in which the first flow space portion 13 is formed so that condensed water heading toward the high temperature area is delivered throughout the first flow space portion 13 between the first channels 11. This enables more effective prevention of flooding caused by stagnation of condensed water and dry out caused by the high temperature area. In other words, when a plurality of rows of first space separation portions 12 are formed to communicate with each other on a straight line orthogonal to the fuel flow direction, condensed water passing through a first space separation portion 12 may escape through a first space separation portion 12 in a next row. In this case, condensed water may not be properly transferred between the first channels 11 in the fuel flow direction, causing stagnation of condensed water and thereby resulting in the flooding phenomenon. When condensed water is not properly transferred to the high temperature area, the dry out phenomenon may occur as in the conventional technology. Therefore, the first space separation portions 12 may be formed to be closed by the first channels 11 in a direction orthogonal to the fuel flow direction so as to allow condensed water passing through the first space separation portions 12 to flow in the spaces between the first channels 11 along the fuel flow direction. This effectively prevents stagnation of condensed water and the dry out phenomenon.

The first flow space portion 13 is a space formed between parallel inclined first channels 11 to allow flow of fuel and condensed water therethrough, and may be formed to be inclined at an angle of more than 0° and less than 90° because the first channels 11 have an angle of more than 0° and less than 90°. With this, condensed water may be transferred to the high temperature area along the first flow space 13, thereby alleviating stagnation, and it may also flow through the first space separation portions 12, thereby further minimizing stagnation. Therefore, a plurality of rows of first flow space portions 13 may be formed inclinedly to be parallel to each other. This ensures smooth supply of fuel to the entire electrode, and maximizes a reaction area of the electrode, thereby increasing power production efficiency.

Although the applicant has described the applicant's preferred embodiments of the present disclosure, it should be understood that these embodiments are not construed as limited to the disclosure and should be understood to include all changes, equivalents, and alternatives within the idea and the technical scope of the present disclosure.

## Claims

1. A fuel cell separator having a point contact channel structure, the fuel cell separator comprising:
a pair of an anode separator and a cathode separator that are formed on opposite sides of a membrane electrode assembly to form a passage for flow of fuel and a passage for flow of air, respectively,
wherein the anode separator comprises a plurality of first channels protruding toward the membrane electrode assembly and spaced apart from each other at regular intervals to form a plurality of passages for flow of the fuel,
and the cathode separator comprises a plurality of second channels protruding toward the membrane electrode assembly and spaced apart from each other at regular intervals to form a plurality of passages for flow of the air,
wherein the first channels and the second channels are formed to be inclined at a predetermined angle along a longitudinal direction of an electrode, and are formed to be inclined at different angles to make point contact.

2. The fuel cell separator of claim 1, wherein the first channels are formed to be inclined at an angle of more than 0° and less than 90° with respect to the longitudinal direction of the electrode, and
the second channels are formed to be inclined at an angle of more than 90° and less than 180° with respect to the same longitudinal direction.

3. The fuel cell separator of claim 2, wherein the first channels and the second channels are formed to be inclined at the same angle in opposite directions.

4. The fuel cell separator of claim 2, wherein an area where the first channels and the second channels make point contact is in a range of 10% to 20% of a total electrode area.

5. The fuel cell separator of claim 1, wherein the anode separator comprises:
a plurality of first space separation portions forming predetermined spaces by dividing the first channels formed in a straight line, and formed at regular intervals along the first channels; and
a first flow space portion for flow of the fuel and condensed water and formed between a plurality of rows of the first channels, and
the cathode separator comprises:
a plurality of second space separation portions forming predetermined spaces by dividing the second channels formed in a straight line, and formed at regular intervals along the second channels; and
a second flow space portion for flow of the air and condensed water and formed between a plurality of rows of the second channels,
wherein the first and second space separation portions are closed by the first and second channels, respectively, in a direction orthogonal to a direction in which the fuel or air flows.
